# EUROPÄISCHE PATENTANMELDUNG

(11) **EP 3 944 986 A1**
(43) Veröffentlichungstag der Anmeldung: **02.02.2022**
(21) Anmeldenummer: 21188507.4
(22) Anmeldetag: 29.07.2021
(51) Int. Cl.: B60P 3/07, B60P 3/36, B62D 25/08, B60R 5/04, B62D 29/04

(54) **FASERVERBUNDBAUTEIL**

(30) Priorität: 29.07.2020 DE 102020120044
(71) Anmelder: Erwin Hymer Group SE, 88339 Bad Waldsee (DE)
(72) Erfinder: Kaiser, Ria, 21077 Hamburg (DE); Kasten, Ole, 21680 Stade (DE); Weltjen, Martin, 21726 Oldendorf (DE); Wulf, Mathis, 21680 Stade (DE)
(74) Vertreter: Waller, Stefan

(57) **Zusammenfassung**

Die Erfindung betrifft ein Faserverbundbauteil (100), welches zumindest einen Teil eines hinter einer Hinterachsanordnung eines Fahrzeugchassis eines Campingfahrzeugs angeordneten Heckstauraums bildet. Das Faserverbundbauteil (100) ist dadurch gekennzeichnet, dass das Faserverbundbauteil (100) zumindest in einem Bereich (110) eine Endlosfaserverstärkung (120) zur Traglasterhöhung aufweist.

## Beschreibung

Die Erfindung betrifft ein Faserverbundbauteil, welches zumindest einen Teil eines hinter einer Hinterachsanordnung eines Fahrzeugchassis eines Campingfahrzeugs angeordneten Heckstauraums bildet, sowie eine Garagenwanne mit einem solchen Faserverbundbauteil.

Es ist im Stand der Technik bekannt, dass Campingfahrzeuge über eine Wannenstruktur zur Aufnahme von Transportgut im Heck als Erweiterung des Chassis aufweisen, welche Garagenwanne genannt wird. Diese kann aus miteinander verbundenen Platten, insbesondere Sandwichplatten, bestehen. Weiterhin ist bekannt, dass einteilige Faserverbundbauteile, insbesondere in Sandwichbauweise zum Einsatz kommen. Die Garagenwanne kann alternativ Heckstauraum, Stauraumerweiterung, Heckgarage, Heckstauraumkiste oder Wanne genannt werden.

Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil, Freizeitmobil oder Motorcaravan. Ein Wohnwagen kann zum Beispiel alternativ als Caravan oder Campinganhänger bezeichnet werden. Campingfahrzeuge werden alternativ auch Freizeitfahrzeugen genannt.

Es ist im Stand der Technik ebenfalls bekannt, dass zur Erhöhung der Traglast der Garagenwanne sogenannte Rahmenverlängerungen in Stahl-Profilbauweise an das eigentliche Chassis montiert, vorzugsweise geschraubt, werden. Diese Rahmenverlängerungen unterspannen die Garagenwanne. Die Rahmenverlängerung erhöht die Traglast der Garagenwanne. Die Rahmenverlängerung bietet bei entsprechender Ausführung die Möglichkeit, eine Anhängerkupplung zur Aufnahme einer Kugelkopfkupplung aufzunehmen.

Im Stand der Technik sind ebenfalls selbsttragende GFK-Garagenwagen bekannt. Die Garagenwanne, welche auch Stauraumwanne genannt wird, ist zwischen Stoßfänger und dem Chassis bzw. Fahrgestell, insbesondere den Längsträgern des Chassis, angeordnet.

Unter einem Faserverbundbauteil wird ein Bauteil verstanden, dessen Material einen Faserverbund aufweist oder aus einem solchen besteht. Ein Faserverbund kann alternativ auch Faser-Kunststoff-Verbund (FKV), faserverstärkter Kunststoff oder Faserverbundkunststoff (FVK) genannt werden. Unter einem Faserverbund wird ein Werkstoff verstanden, welcher Verstärkungsfasern und eine Kunststoffmatrix aufweist. Die Matrix umgibt die Fasern, die durch Adhäsiv- oder Kohäsivkräfte an die Matrix gebunden sind. Durch die Verwendung von Faserwerkstoffen, hat ein Faserverbund im Allgemeinen ein richtungsabhängiges Elastizitätsgesetz.

Ohne Matrixwerkstoff sind die hohen spezifischen Festigkeiten und Steifigkeiten der Verstärkungsfaser nicht nutzbar. Erst durch die geeignete Kombination von Faser- und Matrixwerkstoff entsteht ein neuer Konstruktionswerkstoff.

Ein Faserverbund weist in der Regel eine hohe spezifische Steifigkeit und Festigkeit auf. Dies macht ihn zu einem geeigneten Werkstoff in Leichtbauanwendungen. Aus Faserverbunden werden überwiegend flächige Strukturen hergestellt.

Die mechanischen und thermischen Eigenschaften von Faserverbunden können über eine Vielzahl von Parametern eingestellt werden. Neben der Faser-Matrix-Kombination können z.B. der Faserwinkel, der Faservolumenanteil, die Schichtreihenfolge usw. variiert werden.

Faser-Kunststoff-Verbunde gehören zu der Klasse der faserverstärkten Werkstoffe, die Mitglied der Klasse der Verbundwerkstoffe sind.

Ein Faserkunststoffverbund kann als Konstruktion aufgefasst werden. Seine Elemente müssen so kombiniert werden, dass sich die gewünschten Eigenschaften einstellen. Durch das Zusammenspiel der spezifischen Eigenschaften von Faserwerkstoff und Matrixwerkstoff entsteht ein neuer Werkstoff.

Die Fasern leiten die Kräfte. Durch ihre im Vergleich zur Matrix hohe Steifigkeit ziehen sie die Last auf sich. Da die Faser eine höhere Steifigkeit als die Matrix hat, wird die Last entlang der Fasern geleitet. Quer zur Faser haben Matrix und Faser oft ähnliche Elastizitätsmodule. Zusätzlich müssen die Kräfte durch Adhäsivkräfte über die Faser-Matrix-Grenzfläche geleitet werden. Daher findet quer zur Faser in der Regel keine Verstärkungswirkung statt. Grund hierfür ist auch die Dehnungsvergrößerung.

Die Matrix bettet die Fasern. "Betten" meint dabei, dass sie die Fasern räumlich fixiert und die Lasteinleitung und Lastausleitung ermöglicht. Zusätzlich stützt die Matrix die Fasern, z.B. gegen Ausknicken bei faserparallelem Druck. Die Lastübertragung erfolgt über die Adhäsion zwischen Faser und Matrix. Sie kann über Normal- oder Schubkräfte erfolgen. Verbunde, bei denen keine Faser-Matrix-Haftung besteht, sind nur in Sonderfällen belastbar. Die Matrix hat zudem die Aufgabe, die Fasern gegen Umgebungseinflüsse zu schützen.

Die Druckschrift DE 199 29134 A1 offenbart ein Wohnfahrzeug, insbesondere Wohnmobil oder Wohnanhänger, mit einem Fahrzeugchassis, auf dem eine durch wenigstens einen Boden gebildete Wohnplattform angeordnet ist, die Teil eines Wohnaufbaus ist, sowie mit wenigstens einem in Abstand hinter einer Hinterachsanordnung des Fahrzeugchassis angeordneten Heckstauraum, dessen Boden gegenüber dem Niveau der Wohnplattform abgesenkt ist, wobei der wenigstens eine Heckstauraum durch eine gemeinsam tragende Verbundkonstruktion aus an das Fahrzeugchassis angesetzten Trägerprofilen, flächigen Stauraumwandungsteilen und heckseitigen Teilbereichen des Wohnaufbaus gebildet ist.

Eine Aufgabe der vorliegenden Erfindung liegt darin, den Stand der Technik zu verbessern. Es ist insbesondere eine Aufgabe der Erfindung, ein Faserverbundbauteil als Teil eines Heckstauraums eines Campingfahrzeugs anzugeben, welches ein geringes Gewicht aufweist, einfach handhabbar ist und einfach, variabel und kostengünstig herzustellen ist. Eine weitere Aufgabe der vorliegenden Erfindung besteht darin, dass an ein solches Faserverbundbauteil in einfacher Art und Weise eine Anhängerkupplung montierbar sein soll.

Diese Aufgabe wird durch ein Faserverbundbauteil mit den Merkmalen des unabhängigen Patentanspruchs 1 gelöst. Vorteilhafte Weiterbildungen der Erfindung sind in den Unteransprüchen angegeben.

Unter dem Begriff "hinter einer Hinterachsanordnung" wird derjenige Ort verstanden, welcher sich in Fahrtrichtung gesehen hinter der Hinterachsanordnung befindet.

Bevorzugt wird das Faserverbundbauteil zwischen einem Stoßfänger und einem Fahrzeugchassis, insbesondere der Hinterachsanordnung des Fahrzeugchassis, des Campingfahrzeugs angeordnet.

Das Faserverbundbauteil ist ein Bestandteil des Heckstauraums bzw. der Garagenwanne.

Unter Endlosfasern werden insbesondere Fasern mit einer Länge größer als 50 mm verstanden. Endlosfasern können als Rovings oder Gewebe in faserverstärkten Kunststoffen eingesetzt werden. Bauteile mit Endlosfasern erzielen die höchsten Steifigkeits- und Festigkeitswerte.

Unter Rovings werden Bündel von endlosen, unverdrehten, gestreckten Fasern, d.h. Filamente, verstanden, die häufig in der Fertigung von Faserverbundwerkstoffen und besonders von Faser-Kunststoff-Verbunden eingesetzt werden. Der aus dem englischen stammende Fachterminus Rovings wird im deutschen auch als Faserbündel oder Faserstränge bezeichnet. Werden Einzelfilamente aus Glas, Aramid oder Kohlenstoff ohne Drehung zusammengefasst, spricht man zuerst von einem glatten Filamentgarn, und ab einer gewissen Stärke (Feinheit > 0,5 ktex) von einem Roving.

Die Garnfeinheit wird international in Tex (tex) gemessen, diese Einheit hat die alten Einheiten Denier (den), metrische Nummer (Nm) und englische Nummer (Ne) abgelöst.

Die Garnfeinheit, Garnstärke oder der Titer eines Garnes, einer Faser oder eines Filamentes wird als längenbezogene Masse angegeben. Über die Festigkeit des Garnes oder das Volumen sagt die Garnfeinheit nichts aus. Eine hohe Garnfeinheit bedeutet ein kleineres, ein hoher Titer ein größeres Verhältnis von Masse zu Länge. Das Tex (Einheitenzeichen: tex) ist in Deutschland und der Schweiz gesetzliche Einheit für die Angabe der längenbezogenen Masse von textilen Fasern und Garnen, also nicht allgemein für Quotienten der Form Masse durch Länge zulässig. 1 tex entspricht einem Wert von 1 Gramm pro 1000 Meter. Die Größe der Einheit tex entspricht 9 den.

Rovings werden auf Spulen mit Außen- oder Innenabzug geliefert. In der automatisierten Verarbeitung spielen Rovings in der Wickeltechnik sowie dem Strangziehen als Halbzeug eine große Rolle. Rovings werden zudem zur Herstellung von Prepreg verwendet.

Durch das erfindungsgemäße Faserverbundbauteil wird vorteilhafterweise erreicht, dass das Campingfahrzeug eine vermindertes Fahrzeuggewicht, insbesondere Leergewicht, aufweist.

Weiterhin ist vorteilhaft, dass die Faserverbundstruktur in einem einzigen Arbeitsschritt gefertigt werden kann, wodurch Fertigungs- und Montageschritte eingespart werden.

Ein weiterer Vorteil des erfindungsgemäßen Faserverbundbauteils besteht darin, dass das Faserverbundbauteil so ausgeformt sein kann, dass die Verkleidungsstruktur großflächig sein kann und/oder an zahlreichen Punkten aufgenommen werden kann, wodurch diese wiederrum weniger steif und somit leichter ausgeführt werden kann.

Noch ein weiterer Vorteil des erfindungsgemäßen Faserverbundbauteils besteht darin, dass das Gewicht des Campingfahrzeugs gegenüber konventionellen Konstruktionen an einem fahrdynamisch besonders vorteilhaften Ort eingespart wird.

Ferner wird die Nutzmasse erhöht und es werden weniger Bauteile bei der Montage benötigt. Dies erleichtert unter anderem die Handhabung bei der Montage, insbesondere ergibt sich eine geringere Belastung der die Montage durchführenden Personen, mithin eine verbesserte Ergonomie.

Im Gegensatz zum Stand der Technik, bei dem eine Rahmenverlängerung verwendet wird, ist das Eigengewicht der Faserverbundbauteil niedriger, wodurch die Montage einfacher handzuhaben ist und weniger Monteure benötigt werden. Weiterhin kann beim Fertigungsprozess ein Arbeitsschritt eingespart werden.

Ein weiterer Vorteil besteht darin, dass ein Campingfahrzeug mit einem solchen Faserverbundbauteil ein verbessertes Verhalten bei Heckauffahrunfällen ergibt, da das Faserverbundbauteil bzw. die Garagenwanne strukturell besser an das Chassis angebunden ist. Ferner ergibt sich in der Regel ein größerer Böschungswinkel am Heck gegenüber der konventionellen Bauweise mit Rahmenverlängerung. Dies bewirkt unter anderem, dass eine tiefere Garagenwanne - bei zulässigem Böschungswinkel - zum Einsatz kommen, wodurch der Stauraum vergrößert werden kann.

Unabhängig von dem Bereich im Inneren des Faserverbundbauteils, in dem die Endlosfaserverstärkung angeordnet ist, ist es möglich, dass die Außengeometrie der Garagenwanne in verschiedenen Ausprägungen identisch ausgeformt wird, sodass vorteilhafterweise nur ein Werkzeug zur Herstellung des Faserverbundbauteils notwendig ist. Die Endlosfaserverstärkungen können bei einteiligen Faserverbund-Garagenwannen direkt in den Fertigungsprozess kostengünstig integriert werden, so dass neben den Materialkosten nur ein geringfügig höherer Fertigungsaufwand entsteht.

Bevorzugt weist die Endlosfaserverstärkung Kohlenstofffasern auf. Bevorzugt sind die Kohlenstofffasern 1 kg C-Fasern. Alternativ oder zusätzlich können auch andere Fasermaterialien verwendet werden.

Gemäß einer bevorzugten Ausführungsform ist der Boden des Heckstauraums gegenüber dem Niveau der Wohnplattform abgesenkt.

Die Endlosfaserverstärkung befindet sich zumindest in einem Bereich des Faserverbundbauteils. Dieser Bereich kann beispielsweise ein rechteckiger, ein geschlossener oder ein kreisförmiger Bereich sein.

Gemäß einer bevorzugten Ausführungsform verläuft die Endlosfaserverstärkung entlang mindestens zweier unterschiedlicher Richtungen. Hierdurch wird vorteilhafterweise erreicht, dass das Faserverbundbauteil entlang derjenigen Richtungen verstärkt werden kann, welche beim Faserverbundbauteil im eingebauten Zustand besonders belastet sind. Dies können zum Beispiel bevorzugt die Lastpfade das Faserverbundbauteils im eingebauten Zustand sein.

Gemäß einer weiteren Ausführungsform weist das Faserverbundbauteil eine Wannenform auf.

Gemäß einer weiteren Ausführungsform bildet das Faserverbundbauteil den gesamten Heckstauraum bzw. die gesamte Garagenwanne.

Gemäß einer weiteren Ausführungsform ist das Faserverbundbauteil direkt oder indirekt an dem Fahrzeugchassis befestigt. Hierdurch wird vorteilhafterweise die Stabilität der Gesamtstruktur des Campingfahrzeugs und des Heckstauraums bzw. der Garagenwanne erhöht.

Gemäß einer weiteren Ausführungsform ist das Faserverbundbauteil an mindestens einem, insbesondere beiden, Längsträgern befestigt. Bevorzugt ist das Faserverbundbauteil bzw. die Garagenwanne zur Kraftübertragung strukturell an das Chassis, bevorzugt an die Längsträger, jedoch nicht ausschließlich, angebunden. Aufgrund der besonderen Stabilität der Längsträger ergibt sich für dieses Merkmal vorteilhafterweise eine besonders hohe Stabilität der Gesamtstruktur des Campingfahrzeugs und des Heckstauraums bzw. der Garagenwanne.

Gemäß einer weiteren Ausführungsform ist die Endlosfaserverstärkung so angeordnet, dass zumindest an einer Stelle eines Lastpfades des Faserverbundbauteils eine Kraft des Lastpfades von der Endlosfaserverstärkung aufgenommen wird.

Unter einem Lastpfad versteht man die Richtung, in der jede aufeinanderfolgende Last durch das Faserverbundbauteil verläuft. Der Belastungspfad ist eine Darstellung, wie die Last von einem Element auf ein anderes übertragen wird. Er hilft bei der Identifizierung der kritischen Komponenten, welche den Großteil der Lasten aufnehmen, so dass die Konstruktion optimiert werden kann. Jedes Strukturelement des Faserverbundbauteils ist für alle Belastungen, die durch es hindurchgehen, auszulegen.

Insbesondere kann die Kraft eines oder mehrerer Lastpfade durch gezielten Materialeinsatz an einem oder mehreren Lastpfaden oder durch eine Ausrichtung der Fasern entlang eines oder mehrere Lastpfade gut in das Faserverbundbauteil aufgenommen werden.

Durch dieses Merkmal wird vorteilhafterweise erreicht, dass bei gleichem Gewicht eines Faserverbundbauteils höhere Kräfte aufgenommen werden können oder bei niedrigerem Gewicht des Faserverbundbauteils gleich große Kräfte aufgenommen werden können.

Gemäß einer weiteren Ausführungsform weist das Faserverbundbauteil ferner eine Aufnahmevorrichtung für eine Anhängerkupplung auf.

Die Nachrüstung einer Anhängerkupplung ist im Stand der Technik, welche eine Rahmenverlängerung verwendet, sehr aufwendig, da diese am Fahrzeugchassis des im Einsatz befindlichen Fahrzeuges montiert werden muss, an welchem nicht alle Stellen des Chassis direkt zugänglich sind. Durch das oben genannte erfindungsgemäße Merkmal kann eine solche aufwändige Nachrüstung vermieden werden.

Bevorzugt ist die Aufnahmevorrichtung für die Anhängerkupplung an dem Faserverbundbauteil, insbesondere reversibel, befestigt.

Gemäß einer weiteren Ausführungsform ist die Aufnahmevorrichtung für die Anhängerkupplung an das Faserverbundbauteil geschraubt.

Gemäß einer weiteren Ausführungsform weist das Faserverbundbauteil ferner mindestens eine Gewindebuchse zur Verstärkung des einen an dem Faserverbundbauteil angeordneten Schraubpunktes auf.

Durch dieses Merkmal wird vorteilhafterweise erreicht, dass der Schaumstoff im Inneren des Faserverbundbauteils nicht geschädigt wird. Weiterhin kann durch die Inserts eine lokale Reduktion der Dicke der Sandwichplatte vermieden werden, so dass die thermische Isolationswirkung der Sandwichstruktur erhalten bleibt. Bevorzugt kann der Sandwichkern lokal ausgespart werden, so dass ein monolithisches Laminat entsteht.

Unter einer Gewindebuchse kann z.B. ein Schraub-Insert verstanden werden.

Unter dem Begriff "Sandwichplatte" kann eine im Leichtbau verwendete Bauplatte verstanden werden. Eine Sandwichplatte kann drei Schichten aufweisen, insbesondere zwei außenliegende Deckschichtplatten mit einer innenliegenden Kernschichtplatte.

Der Ausdruck "monolithisches Laminat" wird hier mit der Bedeutung eines Laminats benutzt, das derart verbunden ist, dass es in der gleichen Art und Weise wie eine einzelne Platte eines Materials mit einem Elastizitätsmodul, der aus den Elastizitätsmodulen und Dicken der individuellen Schichten des Laminats berechnet werden kann, vibriert. Derartige monolithische Laminate bilden einen Kontrast zu Hohlplatten und Laminaten, die nur schwach zusammengefügt sind, so dass sie sich während Vibration eher wie eine Kiste als wie eine Platte verhalten. Daher gibt es in einem monolithischen Laminat keine "Masse/Zwischenraum/Masse"-Resonanz.

In einem weiteren Aspekt wird die Erfindung durch eine Gargenwanne mit den Merkmalen des Patentanspruchs 11 gelöst. Diese Garagenwanne weist ein oben beschriebenes Faserverbundbauteil auf.

Ein Ausführungsbeispiel der Erfindung ist in den Zeichnungen dargestellt und wird in der nachfolgenden Beschreibung näher erläutert.
Figur 1 zeigt eine im Stand der Technik bekannte Garagenwanne zur Aufnahme von Transportgut im Heck als Erweiterung des Chassis;
Figur 2 zeigt ein Faserverbundbauteil, welches zumindest einen Teil eines hinter einer Hinterachsanordnung eines Fahrzeugchassis eines Campingfahrzeugs angeordneten Heckstauraums bildet, gemäß einer Ausführungsform der Erfindung in einer dreidimensionalen Ansicht; und
Figur 3 zeigt das Faserverbundbauteil der Figur 2 mit einer Anhängerkupplung.

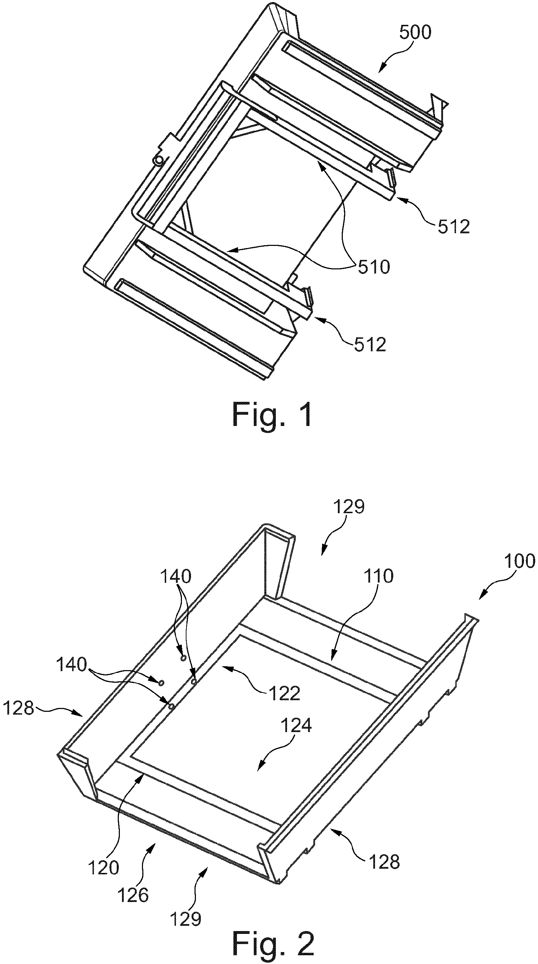

Figur 1 zeigt eine im Stand der Technik bekannte Garagenwanne 500. Eine solche Garagenwanne 500 dient der Aufnahme von Transportgut in einem Heck eines Campingfahrzeuges. Figur 1 zeigt die Garagenwanne 500 in einer Ansicht von unten.

Zur Erhöhung der Traglast der Garagenwanne 500 werden Rahmenverlängerungen 510 in Stahl-Profilbauweise an dem nicht abgebildeten Chassis befestigt, insbesondere geschraubt. An den jeweiligen chassisseitigen Enden 512 werden die Rahmenverlängerungen 510 an dem nicht abgebildeten Chassis befestigt. Die Rahmenverlängerungen 510 unterspannen die Garagenwanne 500 und erhöht somit die Traglast der Garagenwanne 500. Die Garagenwanne 500 bildet sozusagen eine Erweiterung des Chassis.

In Figur 2 ist ein Faserverbundbauteil 100 gemäß einer Ausführungsform der Erfindung gezeigt, welches eine wannenförmige Garagenwanne im Heckstauraum hinter einer Hinterachsanordnung eines Fahrzeugchassis eines Campingfahrzeugs bildet, wobei der Boden des Heckstauraums gegenüber dem Niveau der Wohnplattform abgesenkt ist.

Das Faserverbundbauteil 100 weist in einem rechteckigen Bereich 110 eine Endlosfaserverstärkung 120 zur Traglasterhöhung auf. Der rechteckigen Bereich 110 befinden sich hierbei in einem flächigen Bereich eines Bodenteils 126, welcher zwischen zwei Wandungen 128 angeordnet sind, welche entlang der Fahrtrichtung des Campingfahrzeuges an einer Vorder- und einer Rückseite angeordnet sind. Diese Ausführungsform des Faserverbundbauteils 100 weist an den beiden Seiten zur Linken und zur Rechten der Fahrtrichtung großflächige Öffnungen 129 auf, in denen zum Beispiel Türen angeordnet werden können.

Die Fasern der Endlosfaserverstärkung 120 verlaufen hierbei entlang zweier unterschiedlicher orthogonaler Richtungen 122, 124.

Das Faserverbundbauteil 100 ist teilweise direkt und teilweise indirekt an dem nicht abgebildeten Fahrzeugchassis befestigt. Insbesondere ist das Faserverbundbauteil 100 an beiden Längsträgern befestigt.

Die Endlosfaserverstärkung 120 ist so angeordnet, dass zumindest an einer Stelle eines Lastpfades des Faserverbundbauteils 100 eine Kraft des Lastpfades von der Endlosfaserverstärkung 120 aufgenommen wird. Dies ist vorliegend entlang der zur Fahrtrichtung parallelen Richtung 122 der Fall.

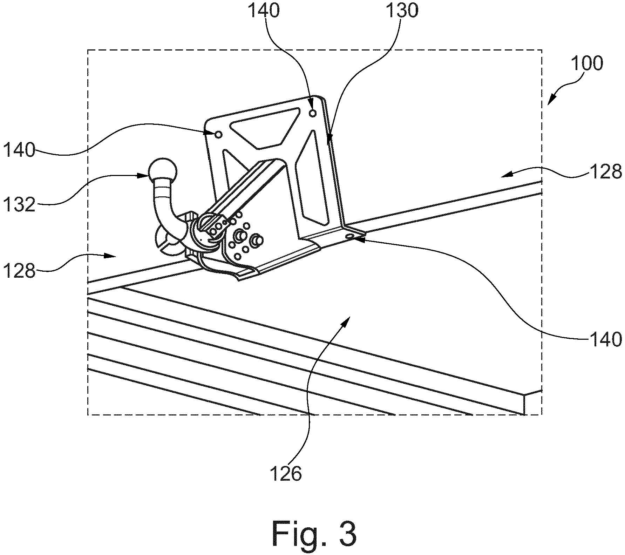

In Figur 3 ist eine Aufnahmevorrichtung 130 für eine Anhängerkupplung 132 zu sehen, wobei die Aufnahmevorrichtung 130 (siehe auch Figur 2) an vier Schraubpunkten an das Faserverbundbauteil 100 geschraubt sind. Jeweils zwei Schraubpunkte befinden sich an der rückwärtigen Wandung 128 sowie an dem Bodenteil 126. An den Schraubpunkten befindet sich zur Verstärkung des jeweiligen Schraubpunktes jeweils eine Gewindebuchse 140.

## Patentansprüche

1. Faserverbundbauteil (100), welches zumindest einen Teil eines hinter einer Hinterachsanordnung eines Fahrzeugchassis eines Campingfahrzeugs angeordneten Heckstauraums bildet,
**dadurch gekennzeichnet, dass**
das Faserverbundbauteil (100) zumindest in einem Bereich (110) eine Endlosfaserverstärkung (120) zur Traglasterhöhung aufweist.

2. Faserverbundbauteil (100) nach Anspruch 1,
**dadurch gekennzeichnet, dass**
der Boden des Heckstauraums gegenüber dem Niveau der Wohnplattform abgesenkt ist.

3. Faserverbundbauteil (100) nach Anspruch 1 oder 2,
**dadurch gekennzeichnet, dass**
die Endlosfaserverstärkung (120) entlang zweier unterschiedlicher Richtungen (122, 124) verläuft.

4. Faserverbundbauteil (100) nach einem der vorangegangenen Ansprüche,
**dadurch gekennzeichnet, dass**
das Faserverbundbauteil (100) eine Wannenform aufweist.

5. Faserverbundbauteil (100) nach einem der vorangegangenen Ansprüche,
**dadurch gekennzeichnet, dass**
das Faserverbundbauteil (100) direkt oder indirekt an dem Fahrzeugchassis befestigt ist.

6. Faserverbundbauteil (100) nach einem der vorangegangenen Ansprüche,
**dadurch gekennzeichnet, dass**
das Faserverbundbauteil (100) an mindestens einem, insbesondere beiden, Längsträgern befestigt ist.

7. Faserverbundbauteil (100) nach einem der vorangegangenen Ansprüche,
**dadurch gekennzeichnet, dass**
die Endlosfaserverstärkung (120) so angeordnet ist, dass zumindest an einer Stelle eines Lastpfades des Faserverbundbauteils (100) eine Kraft des Lastpfades von der Endlosfaserverstärkung (120) aufgenommen wird.

8. Faserverbundbauteil (100) nach einem der vorangegangenen Ansprüche, **ferner aufweisend:**
eine Aufnahmevorrichtung (130) für eine Anhängerkupplung (132).

9. Faserverbundbauteil (100) nach dem vorangegangenen Anspruch,
**dadurch gekennzeichnet, dass**
die Aufnahmevorrichtung (130) für die Anhängerkupplung (132) an das Faserverbundbauteil (100) geschraubt ist.

10. Faserverbundbauteil (100) nach dem vorangegangenen Anspruch, **ferner aufweisend:**
mindestens eine Gewindebuchse (140) zur Verstärkung einen an dem Faserverbundbauteil (100) angeordneten Schraubpunktes.

11. Garagenwanne (200) mit einem Faserverbundbauteil (100) nach einem der vorangegangenen Ansprüche.
